# EUROPEAN PATENT APPLICATION

(11) **EP 4 099 242 A1**
(43) Date of publication of application: **07.12.2022**
(21) Application number: 22172847.0
(22) Date of filing: 11.05.2022
(51) Int. Cl.: G06Q 10/06, G06Q 30/02, G06Q 30/06

(54) **ORDER MANAGEMENT SYSTEM, ORDER MANAGEMENT METHOD, AND PROGRAM**

(30) Priority: 02.06.2021 JP 2021093149
(71) Applicant: CANON KABUSHIKI KAISHA, Ohta-ku Tokyo 146-8501 (JP)
(72) Inventor: IIDA, Toshihiko, Ibaraki (JP); KANAMOTO, Yoshiji, Tokyo (JP)
(74) Representative: WESER & Kollegen Patentanwälte PartmbB

(57) **Abstract**

An order management system is provided. The system receives a quotation request for a print product, and based on a product specification and a desired delivery included in the quotation request and a production capacity of an apparatus for producing the print product, creates a quotation including a submission deadline; transmits to an orderer the created quotation, receives an order; and updates the production capacity based on the quotation corresponding to the order.

## Description

### BACKGROUND OF THE INVENTION

### Field of the Invention

The present invention relates to an order management system, an order management method, and a program for accomplishing digitization and automation of transactions in order placement/order reception of print jobs.

### Description of the Related Art

In recent years, in the field of commercial printing, the importance of and demand for a system capable of realizing order placement/order reception by electronic transactions, such as web order placement, and electronic submission operations have been increasing.

In response to demand, some printing companies have implemented webbased order placement/order reception systems. In response to the spread of electronic order placement/order reception work, common specifications of various commands and information in the order placement/order reception work have been created so that order reception systems and order placement systems do not differ between the various companies. Coordination is possible even between different systems by a common specification.

However, there is a further challenge in providing convenience to a user in an electronic system for order placement/order reception of a print product and performing a submission process in the prior art.

Generally, in the business of print product order placement/order reception work, the orderer informs the printing company of an outline of the product order details, obtains the quotation, and makes an order based on the quotation. In practice in print product order placement/order reception work, creation of submission data is not necessarily completed before the ordering stage, and the data may be submitted after the order.

If there is a problem in the submitted print data, the process cannot proceed to the printing step until the problem is corrected. In digital printing, there is a step called "preflight" in which it is checked in advance whether there is any problem. When the preflight check is completed and it is confirmed that there is no problem, printing can be started.

In order to deliver the product in accordance with the desired delivery requested by the customer, production must be carried out taking into account the number of days required for inspection, packaging, and shipment. However, in a transaction where submission is after the order as previously described, the timing at which the production becomes possible, that is, the timing at which the print data is submitted and the preflight is completed is not fixed. If the orderer delays the timing at which proper print data is submitted, delivery cannot be made by the desired delivery. Japanese Patent Laid-Open No. 2006-011663 discloses rescheduling a print schedule when printing will not be on time for a schedule decided beforehand. In this method, production can be started from the time of submission, and even if ultimately the production will not be on time, the production can be performed delaying the delivery, but delivery cannot be made by the desired delivery date. In addition, it is not possible to ascertain in advance whether or not the production will be on time for the desired delivery. If it is found that it will not be on time after the production is started, production that was performed may be wasteful.

### SUMMARY OF THE INVENTION

The present invention presents to an orderer a submission deadline for realizing a desired delivery at the time of quotation.

The present invention has the following configurations. The present invention in its first aspect provides an order management system as specified in claims 1 to 12.

The present invention in its second aspect provides a program as specified in claim 13.

The present invention in its third aspect provides an order management method as specified in claim 14.

By virtue of the present invention, it is possible to present to an orderer a submission deadline for realizing a desired delivery at the time of quotation.

Further features of the present invention will become apparent from the following description of exemplary embodiments with reference to the attached drawings.

### BRIEF DESCRIPTION OF THE DRAWINGS

FIG. 1 is a system configuration diagram.
FIG. 2 is view illustrating a hardware configuration of an information processing apparatus.
FIG. 3 is view illustrating a software configuration of an information processing apparatus 107.
FIG. 4 is view illustrating a software configuration of an information processing apparatus 108.
FIG. 5 is a schematic diagram of an operation screen that is displayed in an electronic transaction system.
FIG. 6 is a flowchart for describing a processing flow when a quotation request is received in a first embodiment.
FIG. 7A is a schematic diagram of a data table that a production management program has in the first embodiment.
FIG. 7B is a schematic diagram of a screen of the production management program in the first embodiment.
FIG. 8 is a flowchart for describing a processing flow when a submission is received in the first embodiment.
FIG. 9A to FIG. 9I are views illustrating examples of electronic transaction data in the first embodiment.
FIGS. 10A and 10B are flowcharts for describing a processing flow when a quotation request is received in a second embodiment.
FIG. 11A and FIG. 11B are views illustrating data tables that the production management program has in the second embodiment.
FIG. 12AA to FIG. 12B are views illustrating examples of electronic transaction data in the second embodiment.
FIG. 13 is a schematic diagram of a screen of the production management program in a third embodiment.
FIGS. 14A and 14B are flowcharts for describing a processing flow when a quotation request is received in the third embodiment.
FIG. 15 is a flowchart for describing a processing flow when a submission is received in the third embodiment.
FIG. 16A and FIG. 16B are views illustrating examples of electronic transaction data in the third embodiment.
FIG. 17 is a view illustrating electronic transaction data transmission and response.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### (First Embodiment)

### <System Configuration>

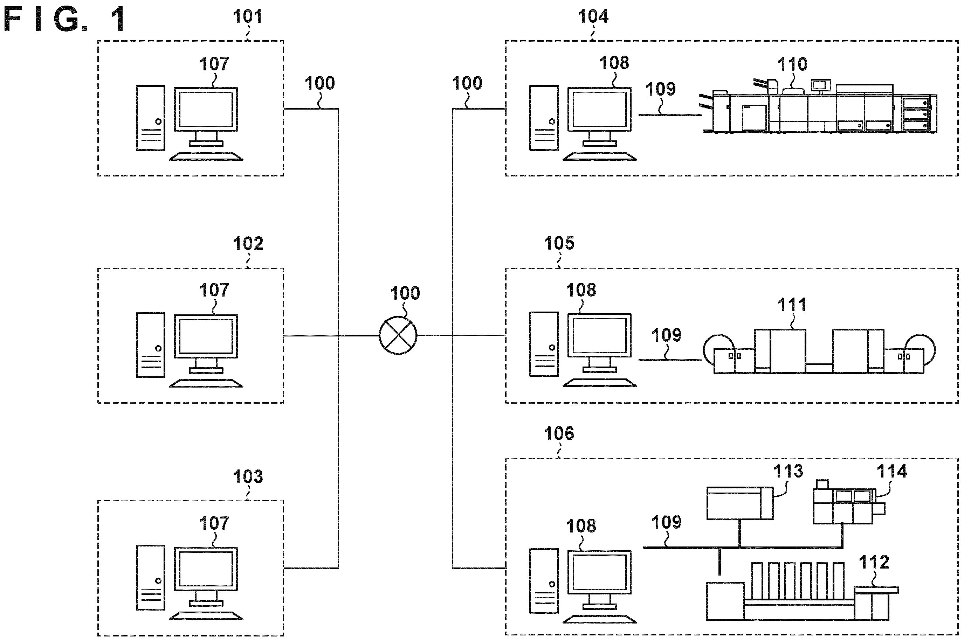

FIG. 1 is a block diagram showing an order placement/order reception system according to a first embodiment of the present invention. The systems are roughly divided into orderer systems 101, 102, and 103 and printing company systems 104, 105, and 106, which are interconnected by the Internet 100. The orderer systems 101, 102, and 103 include at least one information processing apparatus 107. An orderer system may be referred to as the orderer. A printing company system is sometimes referred to as an order management system because it manages orders for printing.

Hereinafter, the internal configuration of the printing company systems 104, 105, and 106 will be described in detail. As shown in FIG. 1, a plurality of devices are interconnected by a network 109. As examples of the plurality of apparatuses, the information processing apparatus 108, the image forming apparatuses 110, 111, and 112, a laminator 114, a CTP 113, and the like are connected.

The image forming apparatus 110 is a cut sheet type digital printer. The image forming apparatus 111 is a continuous sheet digital printer. The image forming apparatus 112 is an offset type printing device. The printing company usually has a plurality of apparatuses having different characteristics, selects an optimum image forming apparatus in consideration of various conditions such as the content of the order received, the number of products, the unit price of the products, and the quality, and then performs production.

Each device is controlled under a workflow software group operating on the information processing apparatus 108, and processes electronic transaction data received from and data submitted by the orderer systems 101, 102, and 103 to produce a product.

Further, the transmission and reception of a request for order placement/order reception for a print product from the orderer systems 101, 102, and 103 to the printing company systems 104, 105, and 106 are achieved by mutually transmitting and receiving a common electronic transaction format via the Internet 100. By performing electronic transactions in a common format, it is easier to automate the transactions. Even if the orderer system and the printing company system are all different systems, communication between the systems is possible as long as it is possible to exchange information in the same electronic transaction format, and so it is possible to automate easily. In the present embodiment, the description will be given using PrintTalk as the electronic transaction format.

### <Hardware configuration of an information processing apparatus>

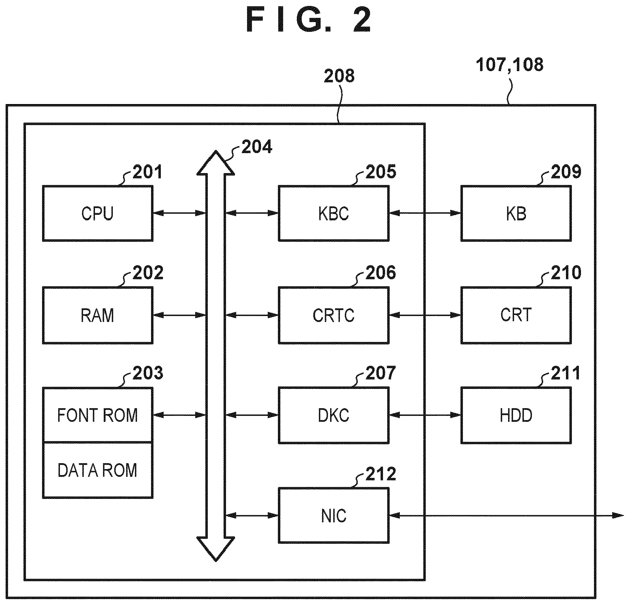

FIG. 2 is a block diagram showing a configuration of the information processing apparatuses 107 and 108.

In this figure, a CPU 201 executes a program of an OS or a general application stored in the program ROM of a ROM 203 or loaded into a RAM 202 from an HDD 211. The ROM 203 also has a font ROM or a data ROM. The RAM 202 functions as the main memory, work area, etc. of the CPU 201. A keyboard controller (KBC) 205 controls input from a keyboard or a pointing device (not shown). A display controller CRTC 206 controls the display on a display unit CRT 210. Of course, the display unit is not necessarily a CRT. A disk controller (DKC) 207 controls access to the HDD 211 which stores a boot program, various applications, font data, and the like. A network controller (NIC) 212 is connected to a network and performs communication control processing with other devices connected to the network. A bus 204 is connected to the CPU 201, the RAM 202, the ROM 203, various controllers, and the like, and carries data signals and control signals.

In the case of a portable terminal, a touch panel controller or the like may be included in the configuration instead of the keyboard controller (KBC) 205. It may also include a mass storage device that replaces the HDD 211. Further, the network controller (NIC) 212 has a different internal configuration in the case of comprising either a wired LAN apparatus or a wireless LAN apparatus and in the case of comprising both. However, the differences due to these internal configurations are hidden inside the network controller (NIC) 212, and the system can be controlled as equivalent to the other modules shown in FIG. 2.

### <Software configuration of the information processing apparatus 107>

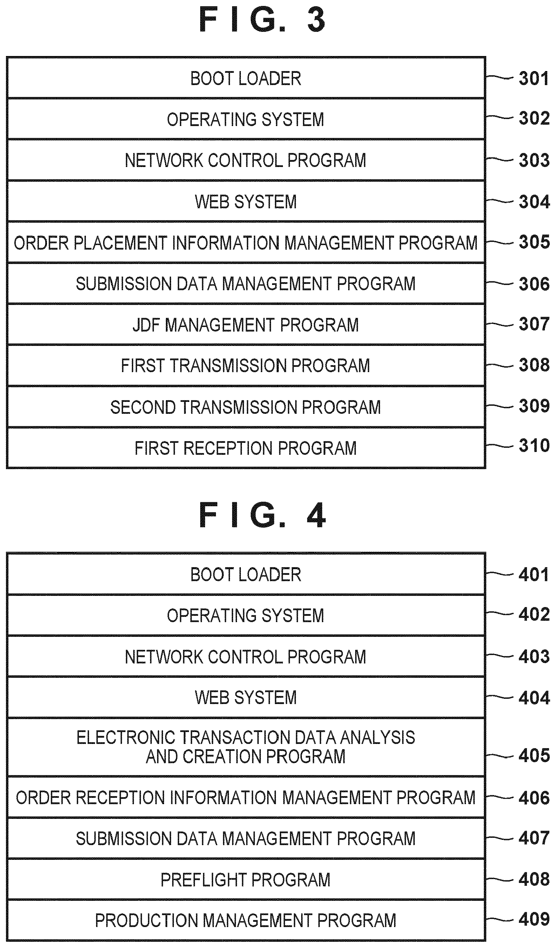

FIG. 3 is a diagram exemplifying a configuration of a program included in the information processing apparatus 107 in the orderer systems 101, 102, and 103.

A boot loader 301 is a program that is executed immediately after the power of the information processing apparatus 107 is turned on. Such a program includes programs for executing various startup sequences required to start the system. An operating system 302 is a program for providing an execution environment for various programs that realize the functions of the information processing apparatus 102. This provides functions such as control of resources such as the memory of the information processing apparatus, i.e., the ROM 203 and the RAM 202, and the HDD 211. A network control program 303 is a program executed when transmitting and receiving data to and from devices connected via a network. That is, it is software used for controlling the NIC 212 and transmitting and receiving data and files to and from the outside via the Internet 100. A web system 304 is a program for receiving or accepting webbased services from an external device connected via a network, or for transmitting data or commands to an external web service.

An order placement information management program 305 is a program that plays a central role in the orderer systems 101, 102, and 103. That is, it performs an order for a print product to an external printing company system, and receiving and interpreting a response as a result of the order, which are a main purpose of the orderer system, and provides a UI for allowing an operator to give various commands related thereto. The various commands and their execution order will be described later.

A submission data management program 306 is for managing original data of a print product to be ordered, that is, document image data. As long as it only holds the document image data until it is transmitted, the functions of the file system provided in the operating system 302 can be used as is. However, in the present embodiment, it is assumed that the submission data management program 306 also includes a program or the like used when performing data processing, content creation, editing, and the like.

A JDF management program 307 is a program used when a print product is ordered from the printing company systems 104, 105, and 106, and when a file of a JDF format in which the form of the product is represented electronically is created, edited, or the like. The JDF information edited or created by this program is transmitted by the order placement information management program 305 to the printing company systems 104, 105, and 106 at the time of ordering the production of a print product.

A first transmission program 308 is a program for performing processing for transmission of various commands transmitted in processing of order placement/order reception from the orderer systems 101, 102, and 103 to the printing company systems 104, 105, and 106. Commands that the first transmission program 308 transmits will be described later.

A second transmission program 309 is a program for transmitting the submission data, which is print target data, after an order command is transmitted and accepted among the various commands of which the first transmission program 308 is the transmission target. The submission data and the second transmission program operation will be described later.

The first reception program 310 is a program for, when commands and data are transmitted to a printing company system by the first transmission program 308 and the second transmission program 309, receiving response data which is the processed result and analyzing the received result.

### <Software configuration of the information processing apparatus 108>

FIG. 4 is a diagram exemplifying a configuration of a program included in the information processing apparatus 108 in the printing company systems 104, 105, and 106.

A boot loader 401 is a program that is executed immediately after the power of the information processing apparatus 108 is turned on. Such programs include programs for executing various startup sequences required to start the system. An operating system 402 is a program for providing an execution environment for various programs that realize the functions of the information processing apparatus 108. This provides functions such as control of resources such as the memory of the information processing apparatus, i.e., the ROM 203 and the RAM 202, and the HDD 211. A network control program 403 is a program executed when transmitting and receiving data to and from devices connected via a network. That is, it is software used for controlling the NIC 212 and transmitting and receiving data and files to and from the outside via the Internet 100. A web system 404 is a program for receiving or accepting webbased services from an external device connected via a network, or for transmitting data or commands to an external web service.

An electronic transaction data analysis and creation program 405 is a program for analyzing electronic transaction data received from an orderer and creating a response to the received electronic transaction data or a new request. In accordance with the result of analyzing the electronic transaction data, the control unit performs appropriate processing by causing appropriate programs to operate cooperatively.

An order reception information management program 406 is a program for managing orders. In addition to managing transaction steps prior to delivery, it is also used for next and subsequent transactions by analyzing past transaction data. Submission data stored in the storage by a later-described submission data reception program 407 is stored by this program in association with the corresponding electronic transaction data.

A submission data reception program 407 is for receiving and storing print data submitted from the orderer systems 101, 102, and 103. The stored print data is managed by the order reception information management program 406 in association with the electronic transaction data.

A preflight program 408 is a program for performing preflight on the print data received by the submission data reception program 407. Preflight is a step of checking whether there is a problem in the print data. Errors detected in preflight include lack of a font, cutting zone placement, color space inconsistencies, improper scaling, and the like.

A production management program 409 is a program for managing the production step. In addition to making a print instruction to the image forming apparatus, it has functions for managing business days and production capacity, determining a schedule for production, and the like.

### <Schematic diagram of operation screen displayed in electronic transaction system>

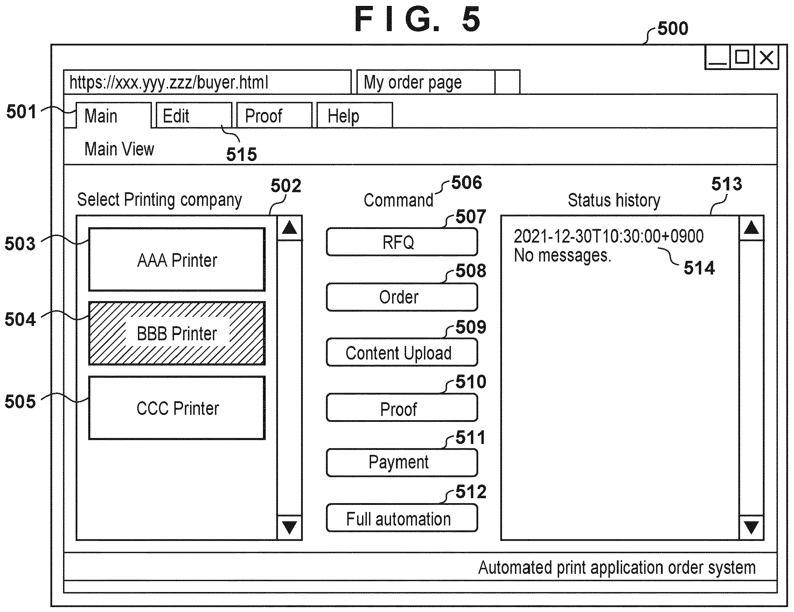

FIG. 5 illustrates an example of an operation screen displayed on the information processing apparatus 107 in the orderer systems 101, 102, and 103. With reference to this drawing, an operation of performing submission after the order placement described in the present embodiment will be described.

A state in which a main tab for order settings 501 of a main screen 500 of the order reception information management program 306 has been selected is illustrated. In the example shown in the figure, a printing company selection portion 502 is presented, and a first printing company 503, a second printing company 504, and a third printing company 505 are displayed. The orderer can select any desired printing company for which to execute the ordering process from out of the printing companies. The order information program 306 according to the present embodiment is configured so that the addition, deletion, and the like of printing company to which an order can be placed can be managed on a printing company management screen (not shown). In the example shown in the figure, the second printing company 504 is shown to be selected as the order destination.

A command selection unit 506 is provided with a plurality of command selection means for transmitting various processes relating to order placement/order reception for print products to the printing company.

A quotation request issuing unit 507 is a UI control for giving an instruction to transmit a quotation request command for a cost for creating a product. When the quotation request command issuing unit 507 is pressed, a screen for inputting various kinds of information necessary for the quotation request (not shown) is transitioned to, and the printing company uses the screen to input information necessary for issuing a quotation request command.

An order issuing unit 508 is a UI control for transmitting an order command made up of information included in the quotation information acquired by selecting the quotation request issuing unit 507.

A submission data transmitting unit 509 is used when instructing transmission of submission data to be printed to the printing company. The system according to the present embodiment is configured so that the submission processing by the submission data transmitting unit 509 can be executed after processing the order in an order command issuing unit 508. However, it is also possible to configure the system so as to enable the submission processing to be at the same time as the order processing.

A proof requesting unit 510 is a UI control for making a request to the printing company to perform a test print in accordance with production conditions necessary for the production of the print product and submission data transmitted by the order issuing unit 508 and the submission data transmitting unit 509. Whether the test print involves processing for printing the submission data onto physical media or whether it is accomplished by image verification by electronic means depends on the system or customer requirements. The invention according to the present embodiment does not limit the actual means or form of the proofing. It is also assumed that there are cases where the orderer himself/herself performs the proof processing. In this case, the proof requesting unit 510 is not essential.

A payment execution unit 511 is a UI control for supporting the transmission of a command for executing processing for payment of compensation for products produced by the printing company through the respective units such as the order issuing unit 508, the submission data transmitting unit 509, and the proof requesting unit 510. In this case, it is assumed that a money amount is calculated based on money amount information acquired as the result of execution by the quotation request issuing unit 507 and payment processing is mainly performed by electronic means in the system according to the present embodiment.

A status confirmation unit 513 is provided as an area for displaying details of transmission of commands selected by the command selection unit 506 to a printing company, and responses that are the result of execution of the commands by print product production systems 104, 105, and 106. In this example, the display of commands to be executed on the print product production systems 104, 105, and 106, notification information, and the like is also configured to be displayable by the status confirmation unit 513.

### <Transmission and response of electronic transaction data>

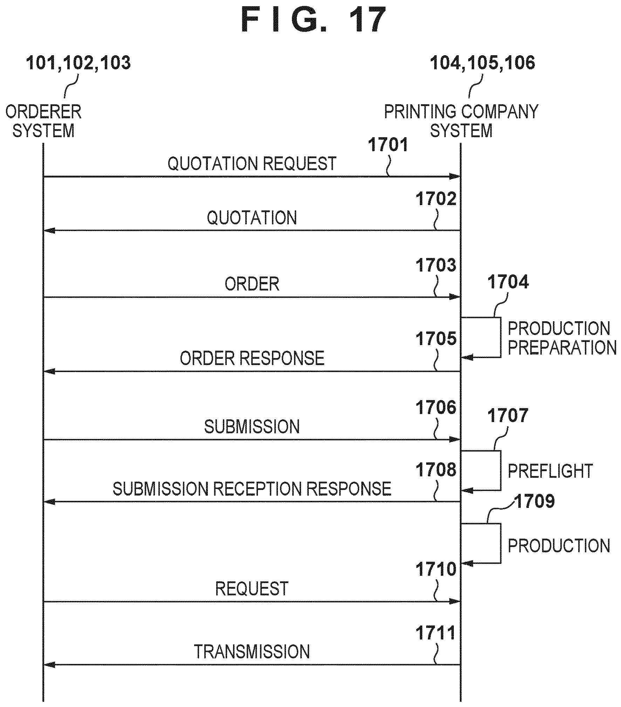

FIG. 17 is a diagram showing a sequence of commands and responses exchanged between the orderer systems 101, 102, and 103 and the printing company systems 104, 105, and 106.

A quotation request 1701 is transmitted to the printing company systems 104, 105, and 106 from the orderer systems 101, 102, and 103.

The printing company systems 104, 105, and 106 transmit a quotation 1702 to the orderer systems 101, 102, and 103 in response to the quotation request 1701.

Based on the quotation information included in the quotation 1702, the orderer systems 101, 102, and 103 transmit an order 1703 to the printing company systems 104, 105, and 106.

When the orderer systems 101, 102, and 103 receive the order 1703, the printing company systems 104, 105, and 106 execute production preparation processing that is possible at that stage. The printing company systems 104, 105, and 106 transmit an order response 1705 to the orderer systems 101, 102, and 103.

The orderer systems 101, 102, and 103 create submission data, and when they are ready, transmit a submission 1706 to the printing company systems 104, 105, and 106 to execute submission processing.

When the printing company systems 104, 105, and 106 have received the submission 1706, the printing company systems, 104, 105, and 106 execute preflight processing 1707. The printing company systems 104, 105, and 106 transmit a submission reception response 1708 to the orderer systems 101, 102, and 103. If an error occurs during preflight, a submission rejection response is sent.

The printing company performs production 1709 of the product for which the submission was received. Then, when production is started, an invoice 1710 is transmitted from the printing company systems 104, 105, and 106 to the orderer system. The timing of sending the invoice 1710 is any timing after the price is determined. When the production is completed, the product is shipped 1711.

### <Flow of processing when a quotation request is received>

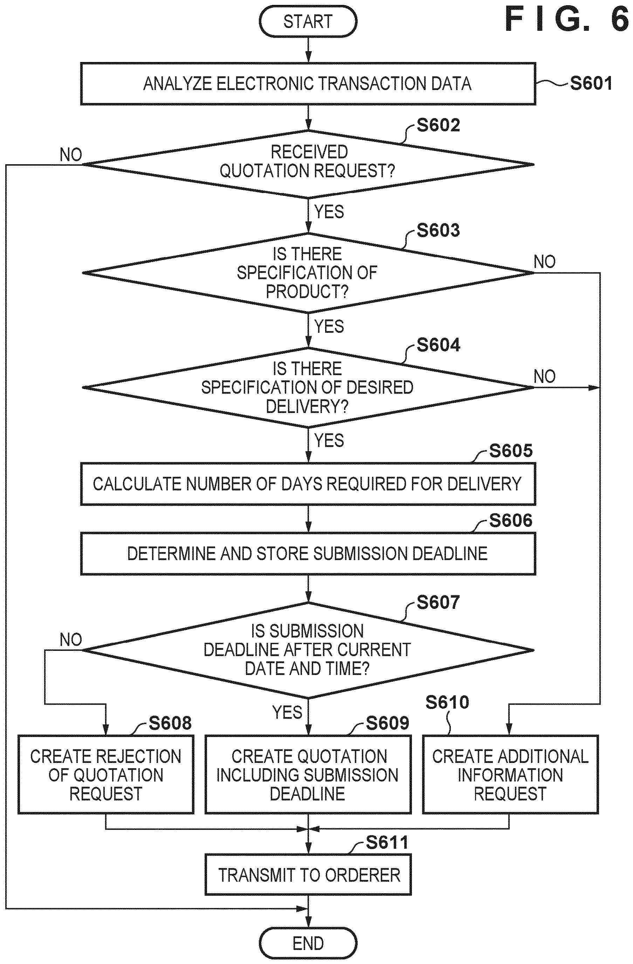

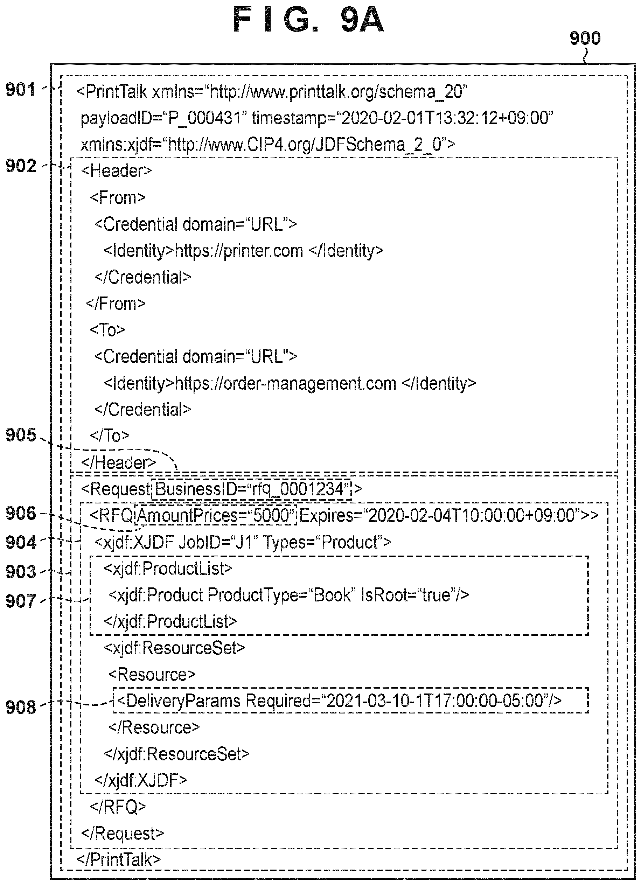

FIG. 6 is a flowchart for explaining the flow of processing by the CPU 201 of the information processing apparatus 108 of the printing company system when a quotation request is received. Processing starts when electronic transaction data is received. Examples of electronic transaction data are given in FIG. 9A to FIG. 9I.

In step S601, the CPU 201 analyzes the received electronic transaction data. The electronic transaction data analysis and creation program 405 is used for the analysis. After the analysis, the process proceeds to step S602.

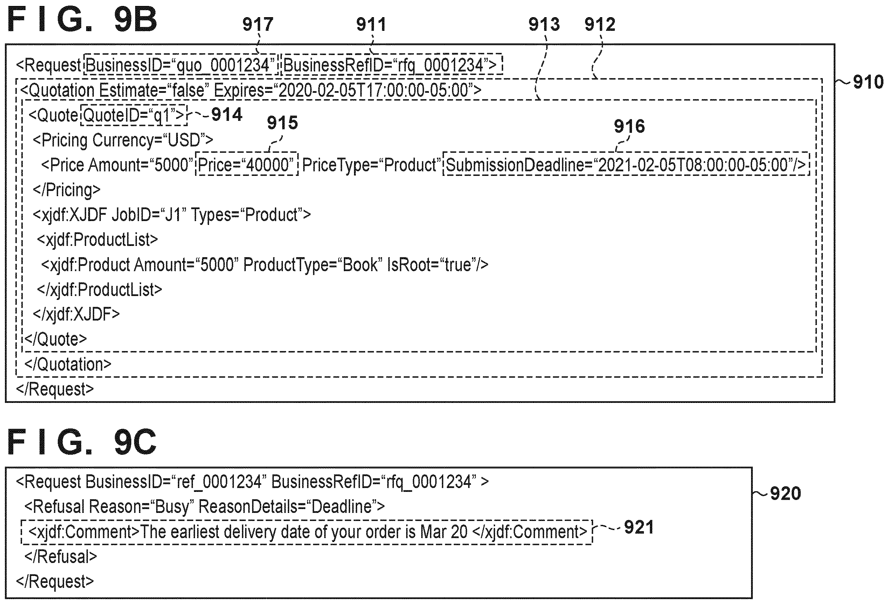

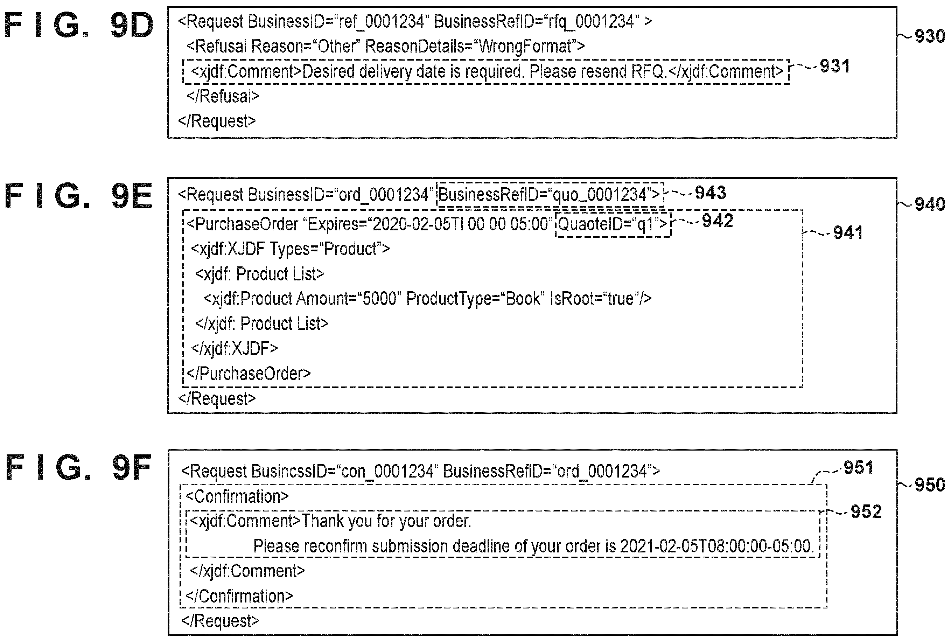

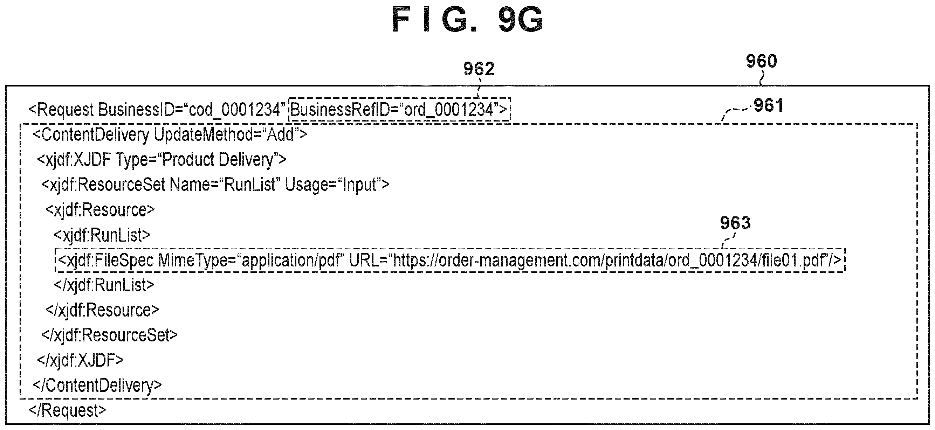

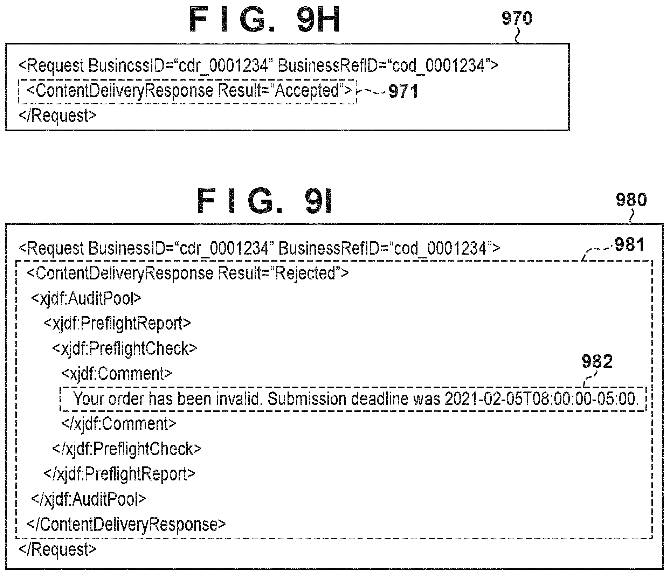

In step S602, the CPU 201 determines whether the received electronic transaction data is a quotation request. It can be determined whether the received electronic transaction data is a quotation request by analyzing the electronic transaction data. Examples of a quotation request is shown in electronic transaction data 901 of FIG. 9A. In the case of an RFQ 904 which is a quotation request command in a request element 903 following a header element 902, the electronic transaction data 901 is determined to be a quotation request. If the received electronic transaction data is a quotation request, the flow proceeds to step S603, and if not, the process ends. Although FIG. 9 is divided into FIG. 9A to FIG. 9I, these are sometimes collectively referred to as FIG. 9 in the following explanation.

In step S603, the CPU 201 determines whether the quotation request specifies a product to produce. In addition to specifying the product type, name, and identifier, detailed specification can also be made using XJDF. Here, a sufficient specification is given to create a quotation. In the present embodiment, the product name and the number of copies are determined to be indispensable items, and it is determined whether or not the number of ordered copies 906 and an ordered product 907 are described. The information necessary for the quotation is sometimes referred to as a product specification. If the product name and the number of copies are specified, the process proceeds to step S604, and if not, the process proceeds to step S610.

In step S604, the CPU 201 determines whether the quotation request specifies a desired delivery. This is determined based on whether a desired delivery 908 is described. In the present embodiment, since a submission deadline for realizing the desired delivery is to be determined, the specification of the desired delivery is necessary. If the desired delivery is specified, the process proceeds to step S605, and if not, the process proceeds to step S610.

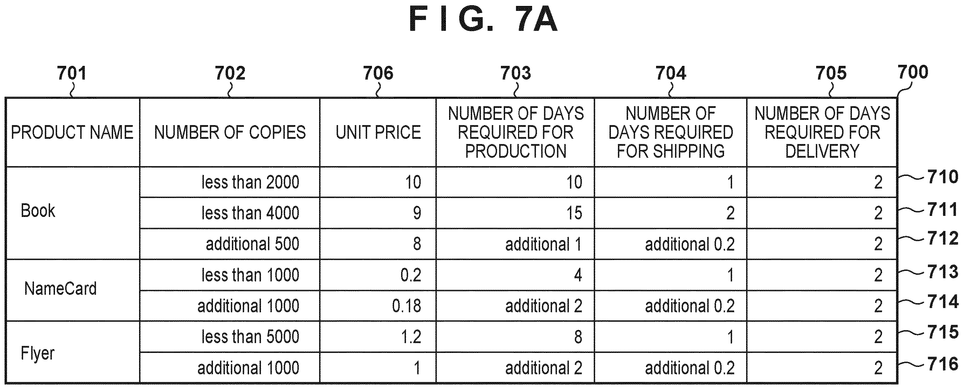

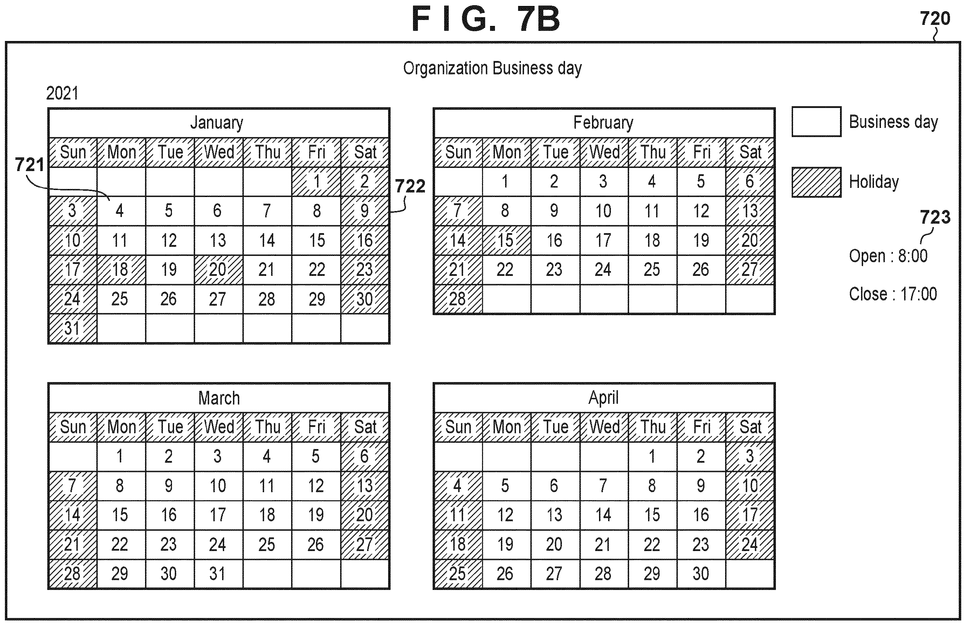

In step S605, the CPU 201 calculates the number of days required for delivery from the specified product. How to calculate the number of days required for delivery will be described with reference to FIG. 7A and FIG. 7B. After calculating the number of days required for delivery, the process proceeds to step S606.

In step S606, the CPU 201 determines the submission deadline. The submission deadline is a deadline indicating that it will be possible for production to satisfy the desired delivery if the submission is completed by that date and time. The method for determining the submission deadline will be described with reference to FIG. 7A and FIG. 7B. The determined submission deadline is stored in association with the electronic transaction data and managed by the order reception information management program 406. After the deadline is stored, the process proceeds to step S607. Note that in this specification, the submission deadline is not limited to indicating only a date, and may include information indicating the timing of the submission deadline, such as a time and a day of the week. This is not only for submissions but also applies to other deadlines.

In step S607, the CPU 201 determines whether the submission deadline determined in step S606 is later than the current date and time. The current date and time is obtained from the system time managed by the operating system 402, and compared with the submission deadline determined in step S606. If the submission deadline is before the current date and time, the delivery cannot be made in accordance with the desired delivery when the quotation request is received. If the submission deadline is after the present time, the process proceeds to step S609, and if not, the process proceeds to step S608.

In step S608, the CPU 201 creates a rejection response to the quotation request. An example of a quotation request rejection response is shown in FIG. 9C. The electronic transaction data analysis and creation program 405 is used for creating all responses thereafter. After creating the response, the process proceeds to step S611.

In step S609, the CPU 201 creates a quotation including a price calculated from the submission deadline determined in step S606 and the unit price 706. An example of a quotation is shown in FIG. 9B. After creating the response, the process proceeds to step S611.

In step S610, the CPU 201 creates a request for information that it determines to be insufficient in step S603 or step S604. It may be included in the rejection to the quotation request. An example is illustrated in FIG. 9D. After creating the request for information, the process proceeds to step S611.

In step S611, the CPU 201 transmits the response created in step S608, step S609, or step S611 to the customer.

By returning a response to the customer by this flow, it is possible to transmit a quotation including a submission deadline, determine whether or not the desired delivery can be realized in consideration of the number of days for production, and transmit a rejection if it is impossible. When the information is insufficient and the submission deadline cannot be determined, a request to add information can be transmitted.

### <Schematic diagram of data table and screen of production management program>

FIG. 7B is a schematic diagram of a screen displayed on the display unit 210 by the production management program 409. FIG. 7A shows a number of days required for delivery management table 700, and FIG. 7B shows a business day management screen 720.

In the number of days required for delivery management table 700, the number of days required for delivery is determined by the sum of three steps: the number of days required for production 703, the number of days required for shipping 704, and the number of days required for delivery 705. In FIG. 7A, respective values are defined in association with the product name 701 and the number of copies 702. Here, the product name corresponds to a product type (ProductType) included in the ordered product 907, and may also be referred to as the product type.

The product name 701 indicates the name (or type) of the product to be produced, and the number of copies 702 indicates the number of copies to be produced. In the present embodiment, the number of days required for production is determined by acquiring these two values from the result of analyzing the quotation request.

The number of days required for production 703 is the number of days required for producing the print product. The production includes a printing step by an image forming apparatus and a processing step by a post-processing apparatus. The number of days required for production does not include steps that can be performed even if there is no print data. A more accurate number of days can be obtained by determining the number of days required for production 703 to vary according to the schedule of use of the image forming apparatus.

The number of days required for shipping 704 indicates the number of days required for shipment steps, such as inspection, packaging, and expense sheet creation. Because it will take more days to inspect a more complex product, the number of days required for shipping also increases.

The number of days required for delivery 705 indicates the number of days it will take to transport the produced product. The number of days required for delivery varies depending on the delivery destination and business conditions of the delivery company. Although it is preferable to determine the number of days required for delivery for each delivery destination, one value is used here for simplicity.

The unit price 706 indicates the unit price of the product. The unit price differs for each product, and is set so that the higher the production volume, the lower the unit price is.

The example of the quotation request 900 in FIG. 9A is given to explain how to calculate the number of days required for delivery. In the quotation request 900, the product name (ProductType) is specified as "Book" and the number of copies is specified as 5000. The required number of days can be calculated by using the number of days required for production 703 and the number of days required for shipping 704. The number of days required for production is 17 days which adds 2 days for an additional 1000 copies to 15 days for 4000 copies, the number of days required for shipping is 2.4 days which similarly adds 0.4 days to 2 days, and the number of days required for delivery is 2 days, for a total of 21.4 days. That is, if production is started 22 business days or more before the desired delivery, it will be possible to deliver in accordance with the desired delivery. Since there are more than 4000 copies of "Book", the price is 40000 dollars since the unit price of 8 dollars on line 712 is applied.

The business day management screen 720 is a screen for managing business days. Business days and non-business days can be switched by selecting the dates 721 and 722. The uncolored dates 721 indicate business days, and the colored dates 722 indicate non-business days. Business days may be importable from another application. Business hours 723 are items for setting the business hours of business days. By selection, it is possible to input the business start time and end time.

The production management program determines the submission deadline based on the required number of days determined in the number of days required for delivery management table 700 and the registered business days. In the above example, since the desired delivery is specified as March 10, 2021, February 5, which is 22 business days earlier, is determined to be the submission deadline. The order reception information management program 406 manages the submission deadline in association with the electronic transaction data. If the determined deadline is later than the present, the process proceeds from step S607 to step S609, and a quotation 910 of FIG. 9B is created. In the quotation 910 created in the present embodiment, the submission deadline 916 is described together with the price 915. The orderer confirms the submission deadline, and if submission is possible, the orderer places the order by specifying the order reference ID (BusinessRefID) 911 of the quotation as the order reference ID 943 as shown in the order 940 of FIG. 9E. The ID is identification information. Print data does not need to be submitted at the time of ordering, and may be submitted by the deadline indicated in the quotation. Also, if the submission deadline is prior to the present, the process proceeds from step S607 to step S608, and a quotation request rejection response 920 illustrated in FIG. 9C is created. If the received quotation request does not indicate the information required to make the quotation and the desired delivery, the process proceeds to step S610, and an information addition request 930 illustrated in FIG. 9D is created.

When the product is a "Book", the number of days required for production or the unit price may vary depending on the number of pages. Therefore, a number of days required for production and a unit price are set as the number of days required for production and the unit price for the "Book" in the number of days required for delivery management table 700 in association with ranges of numbers of pages separated by thresholds. Then, a corresponding range may be specified in the quotation request. For example, one or more number of pages thresholds may be set, and the number of days required for production and the unit price may be determined depending on which threshold delimited range the number of pages fits within.

### <Schedule update when order is accepted>

The order placement system transmits the order (order data) 940 to the printing company system in accordance with the quotation (quotation data) 910. Upon receiving the order data, the information processing apparatus 108 of a small printing company system can update the operation schedule of an image forming apparatus, a post-processing apparatus, and the like based on stored quotation data corresponding to the order data. Updating of the operation schedule is performed by adding an operation schedule for each device based on the order data to a schedule already created for each device to be used, for example. For example, in the case where production of a print product relating to the order is to be performed using one image forming apparatus, an operation schedule spanning the number of days required for production of the order from the submission deadline is added to a schedule of usage of the image forming apparatus, and that is reserved in association with the order. Then, the updated new schedule is stored.

If a new quotation request is made thereafter, the quotation may be prepared based on that schedule. In this manner, the operation schedule of the apparatus can be updated in accordance with quotations based upon which orders are placed, triggered by the orders.

Note that the schedule described above may be referred to as production capacity. In this case, for example, the production capacity may be indicated for each type of product in units of days for business days. For example, the production capacity per unit time is set in advance for each type of product for each production apparatus (such as an image forming apparatus). When production of a certain product is allocated to a certain device, only the allocated amount is subtracted from the production capacity of the device and that is saved as the production capacity. By converting the production capacity per unit time between the types of products, production capacity of types of products other than the types of products assigned to the apparatus shall be determined and maintained. By doing so, it is possible to easily manage the operation schedule of an apparatus.

When the production capacity is determined at the time of ordering, the resources of the printing company system used in the quotation creation may be used overlappingly for the creation of other quotations during the period from the time of the quotation creation to the time of the order. Therefore, the above-mentioned capacity may be reserved when the quotation is created instead of when the order is placed, and may be finalized when the order corresponding to the quotation is received. In this case, since the resource remains unused unless there is an order corresponding to the quotation, the validity period of the quotation may be determined and included in the quotation. After the validity period has elapsed, all the resources reserved in the quotation may be released.

### <Flow of processing when submission is received>

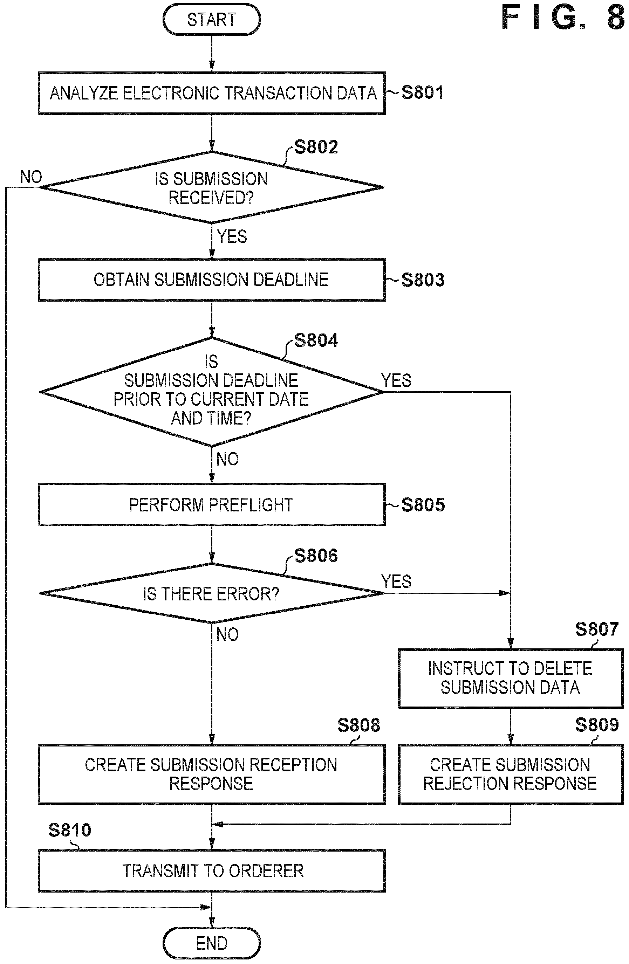

FIG. 8 is a flowchart for explaining the flow of processing by the CPU 201 of the information processing apparatus 108 of the printing company system when electronic transaction data of a submission is received. Processing starts when electronic transaction data is received. It should be noted that FIG. 6 and FIG. 8 may be integrated, and when it is determined that the received data is not a quotation request in step S602 of FIG. 6, for example, the process may be configured to branch to step S802.

In step S801, the CPU 201 analyzes the received electronic transaction data. The electronic transaction data analysis and creation program 405 is used for the analysis. After the analysis, the process proceeds to step S802.

In step S802, the CPU 201 determines whether the received electronic transaction data is a submission. It can be determined whether the received electronic transaction data is a submission by analyzing the electronic transaction data. An example is illustrated in FIG. 9G. If there is a ContentDelivery 961 which is a command for submission in a request element 960, it is determined to be a submission. If the received electronic transaction data is a submission, the flow proceeds to step S803, and if not, the process ends.

In step S803, the CPU 201 obtains the information related to a referenced order and obtains the submission deadline created in association with the quotation. The referenced order can be identified by the order reference ID 962. The electronic transaction data indicated by the order reference ID 962 is acquired from the order information managed by the order reception information management program 406. After obtaining the electronic transaction data, the process proceeds to step S804.

In step S804, the CPU 201 determines whether or not the date and time when the submission was accepted, that is, the present date and time, is earlier than the submission deadline. The current date and time is obtained from the system time managed by the operating system 402, and compared with the submission deadline obtained in step S803. If the submission deadline is prior the present date and time, the process proceeds to step S807, and if not, the process proceeds to step S805.

In step S805, the CPU 201 performs preflight. Preflight is the process of checking whether there is an error in the submission data. When the preflight is executed, the process proceeds to step S806.

In step S806, the CPU 201 determines if the preflight result is that there is an error. Errors detected in preflight include lack of a font, cutting zone placement, color space inconsistency, improper scaling, and the like. If there is an error, the production cannot start until it is corrected, so the submission must be determined invalid and the orderer must be requested to correct the problem. Whether or not an error has occurred is determined based on whether or not the execution result of the preflight program 408 has been completed normally. If there is an error, the process proceeds to step S807, and if not, the process proceeds to step S808.

In step S807, the CPU 201 makes an instruction to delete the received submission data to the submission data reception program 407. When the deletion instruction is made, the processing proceeds to step S809.

In step S808, the CPU 201 creates a submission reception response. FIG. 9H shows an example of the submission reception response data. After creation of the response, the process proceeds to step S810.

In step S809, the CPU 201 creates a submission rejection response. The submission rejection response describes that the submission deadline has expired or the content of the error that was found in the preflight. An example of a submission rejection response is shown in FIG. 9C. After creation of the response, the process proceeds to step S810.

In step S810, the CPU 201 transmits the created submission reception response or submission rejection response data to the orderer system. Upon transmission, the flow ends.

### <Example of electronic transaction data>

FIG. 9A through FIG. 9I show electronic transaction data transmitted and received between an orderer and a printing company in the present embodiment.

FIG. 9A illustrates examples of the quotation request 900 sent from an orderer to a printing company. FIG. 9B illustrates an example of the quotation 910 sent from a printing company to an orderer, and FIG. 9C illustrates an example of the quotation request rejection response 920 sent from a printing company to an orderer when it is not possible to deliver by the desired delivery. FIG. 9D shows an example of the information addition request 930 transmitted from the printing company to the orderer when the information required for the quotation request is insufficient. FIG. 9E shows an example of the order 940 sent from an orderer to a printing company, FIG. 9F shows an example of an order response 950 sent from an orderer to a printing company, and FIG. 9G shows an example of a submission 960 sent to a printing company at the time of submission. FIG. 9H shows an example of a submission reception response 970 transmitted from the printing company to the orderer, and FIG. 9I shows an example of a submission rejection response 980 transmitted from the printing company to the orderer.

FIG. 9A through FIG. 9I are all examples of electronic transaction data when PrintTalk is used, and in PrintTalk, a header element 902 and a request element 903 are described below the root element 901. The header element 902 is an element in which transmission and reception destinations are described. The request element 903 is an element in which transaction data important for the electronic transaction is described. The root element 901 and the header element 902 are elements that are always described, but they are not essential to the explanation, and therefore, only the request element 903 in the electronic transaction data will be described outside of FIG. 9A.

The request element 903 describes a command defined for each type of transaction. The quotation request data 900 describes the RFQ 904 that is a command for a quotation request. The order reference ID 905 is given to the command so that it can be referenced in future transaction data exchange. An order reception information management program 406 manages progress of a transaction by storing the order reference ID 905. In the RFQ 904, the number of ordered copies 906, ordered products 907, and desired delivery 908, which are the conditions of the quotation, are described. In the first embodiment, the ordered product and the desired delivery are defined as essential items for making a quotation. If there is an unspecified item, the process transitions from step S603 or step S604 to step S610, and the quotation request rejection response 930 in FIG. 9D is created. The quotation request rejection response 930 stores a message requesting information that is insufficient as the rejection reason 931.

When the required items are described in the quotation request 900, the processing transitions to step S605 and step S606, and the submission deadline is determined by the method described with reference to FIG. 7A and FIG. 7B. In step S607, it is determined whether the submission deadline is later than the present, and if it is later, the process transitions to step S609 to create the quotation 910. The quotation request 900 is specified in the quotation 910 by the quotation request reference ID 911. A quotation ID 917 contains an ID for referencing the quotation. A command that represents the quotation is Quotation 912. The product quotation 913 is described in Quotation 912. In a product quotation 913, a product quotation ID 914 is described so that the quotation can be specified at the time of ordering. The product quotation 913 describes a price 915 and a submission deadline 916 in addition to specified order conditions. If it is determined in step S607 that the submission deadline is earlier than the present date, the process proceeds to step S608, and the quotation request rejection response 920 of FIG. 9C is created. A shortest delivery date is stored as a rejection reason 921 in the quotation request rejection response 920.

In the case of placing an order under the conditions indicated in the quotation 910, the orderer transmits the order 940. A command representing an order is PurchaseOrder 941. In PurchaseOrder 941, a product quotation ID specification 942 specifying a product to be ordered is described. The value of the product quotation ID specification 942 is a value corresponding to the product quotation ID 914. The quotation reference ID 943 is an attribute for specifying a quotation to be referenced. The value of the quotation reference ID 943 is a value corresponding to the quotation ID 917.

When there is no problem in the content of the received order 940, the printing company transmits the order response 950 in FIG. 9F. At this time, the printing company system may update the operation schedule (or production capacity) of the apparatus according to the order. A command representing an order response is Confirmation 951. Confirmation 951 describes a message 952 of appreciation for the order and that prompts confirmation of the submission deadline.

The orderer submits the data by the submission deadline presented in the quotation. At the time of submission, the submission 960 of FIG. 9G is transmitted. The submission may be sent directly from the orderer or transmitted from the system when the print data is uploaded. The submission 960 specifies which order the submission is for in the order reference ID 962. The order reception information management program 406 uses the order reference ID 962 to associate the order with the print data. A command representing a submission is ContentDelivery 961. ContentDelivery 961 describes the storage location 963 of the print file.

The system of the printing company which has accepted the submission verifies the submission deadline determined at the time of quotation, and when the submission is prior to the submission deadline, the process proceeds from step S804 to step S805, and preflight is executed on the print data. When it is confirmed that there is no problem in the print data in the preflight, the submission reception response 970 of FIG. 9H is created. A command representing a submission reception response is the ContentDeliveryResponse 971. If a submission is received after the submission deadline, the process proceeds from step S804 to step S807 without executing the preflight, and the submission rejection response 980 of FIG. 9I is created. The submission rejection response 980 is also performed by the ContentDeliveryResponse 981. The rejection reason 982 is described in the ContentDeliveryResponse 981. Similarly, if an error is detected in the preflight prior to the submission deadline, the submission rejection response 980 is created. The rejection reason 982 describes the content of the error.

In the present embodiment, the submission deadline is determined from the content of the quotation request, and the quotation is presented to the orderer. Then, in the case where the submission has been accepted before the presented submission deadline, preprocessing of the print data called preflight is performed, and if there is no problem in the data, it is notified that the submission has been accepted. If an error is detected, it is notified that the submission is invalid. If the submission is later than the submission deadline described in the quotation, notification is made that the submission is invalid, without performing preflight.

The system provided in this embodiment prompts a submission to ensure that the delivery date is also observed in print product orders to be submitted later. It is possible to prevent unnecessary steps from being performed by automatically determining whether or not the submission is valid and performing processing on the submitted print data.

### (Second Embodiment)

In the first embodiment, one submission deadline is determined so as to be on time for a desired delivery, and the deadline is described in the quotation. If the customer is unable to submit the data by the deadline, the customer needs to change the conditions and re-transmit the quotation request. Since a quotation must be made many times, there is a possibility that the order placement will be delayed, and in this case, the time for the printing company to produce the order will be shorter.

In the present embodiment, a plurality of products including submission deadlines are described in a quotation and so a customer is enabled to select a product to be ordered by the submission deadline. The description of configuration and processing common to that of the first embodiment will be omitted, and the present embodiment will be described focusing on differences.

### <Flow of processing when quotation request is received>

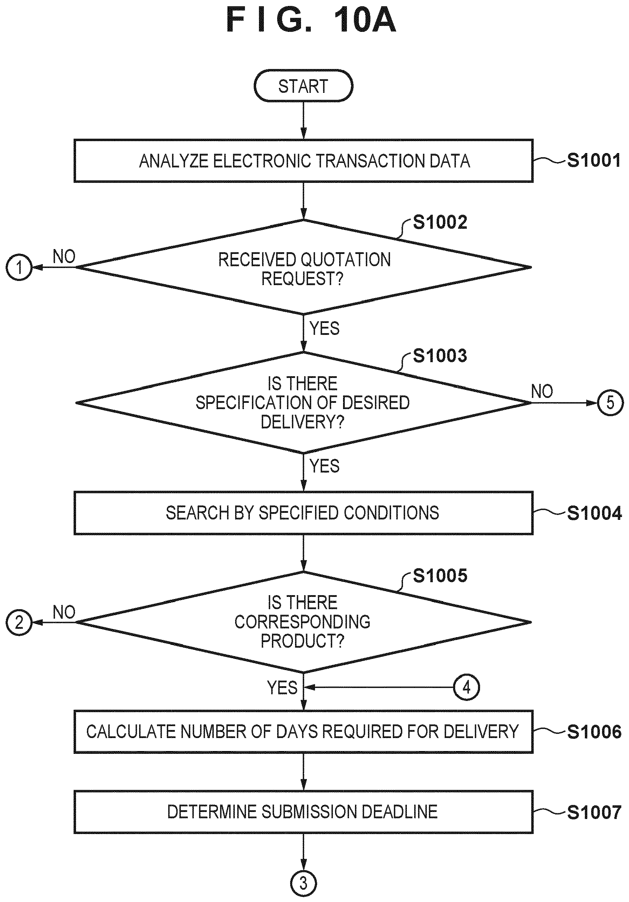

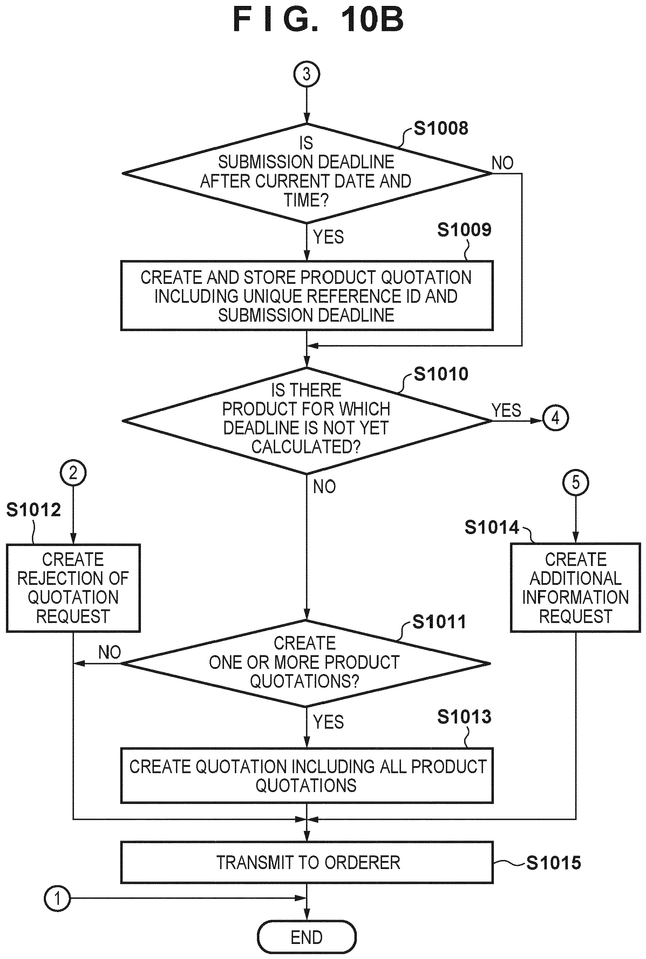

FIGS. 10A and 10B are flowcharts for explaining the flow of processing by the CPU of the information processing apparatus when electronic transaction data is received. Processing starts when electronic transaction data is received. Description will be omitted where it is unrelated to the present invention. The same parts as those in FIG. 6 will be omitted.

Steps S1001 and S1002 are the same as steps S601 and S602. Step S1003 is the same as step S604.

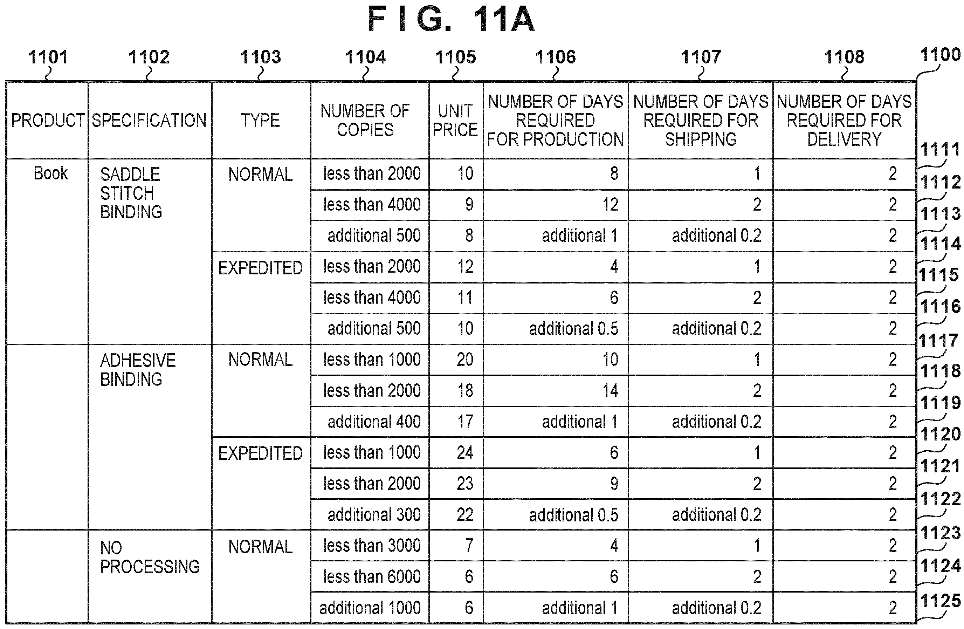

If it is determined in step S1003 that the desired delivery has been specified, the CPU 201 searches for products based on the conditions specified in the quotation request in step S1004. Search is a function of the production management program 409, and is a function for searching for products that meet the conditions in a product data table and creating a partial data table created only with products that meet the conditions. In the quotation request 900 of FIG. 9A, the condition is that the product name specified by the ordered product 907 is "Book". An example of the created data table is shown in FIG. 11A. After the search, the process proceeds to step S1005.

In step S1005, the CPU 201 determines whether or not there is a product that meets the specification of the quotation request as a result of the product search in step S1004. Whether or not there is a specified product is determined based on whether or not at least one product is included in the data table 1100 created in the search. If there is a specified product, the process proceeds to step S1006, and if not, the process proceeds to step S1012.

In step S1006, the CPU 201 calculates the number of days required to deliver one of the found products. For each product included in the data table 1100, for example, the number of days required for delivery is calculated in order from the top. Calculations of the number of days required for delivery are the same as those described with FIG. 7A and FIG. 7B. After the calculation, the process proceeds to step S1007.

In step S1007, the CPU 201 determines the submission deadline for products for which the number of days required for delivery has been calculated in step S1006. Determination of the submission deadline is the same as those described with FIG. 7A and FIG. 7B. After the calculation, the process proceeds to step S1008.

In step S1008, the CPU 201 determines whether the submission deadline calculated in step S1007 is later than the current date and time. The current date and time is obtained from the system time managed by the operating system 402, and compared with the submission deadline calculated in step S1007. If the submission deadline is after the present date and time, the process proceeds to step S1009, and if not, the process proceeds to step S1010.

In step S1009, the CPU 201 creates a product quotation containing a unique reference ID and submission deadline and stores it in the RAM 202. After the deadline is stored, the process proceeds to step S1010.

In step S1010, the CPU 201 determines whether there are products found in step S1004 for which the submission deadline has not been calculated. Whether or not there is a product for which the submission deadline has not been calculated is determined according to whether or not the calculation of the submission deadline of the last product included in the data table 1100 has been completed. If there is a product for which the submission deadline has not been calculated, the process proceeds to step S1006, and if not, the process proceeds to step S1011.

In step S1011, the CPU 201 determines whether one or more product quotations have been created in step S1009. Whether or not a product quotation was created is determined according to whether or not the product quotation is stored in the RAM 202. If product quotation was created, the process proceeds to step S1013, and if no product quotation was created, the process proceeds to step S1012.

In step S1012, the CPU 201 creates a rejection response to the quotation request. The rejection response was described with reference to FIG. 9C. After creating the response, the process proceeds to step S1014.

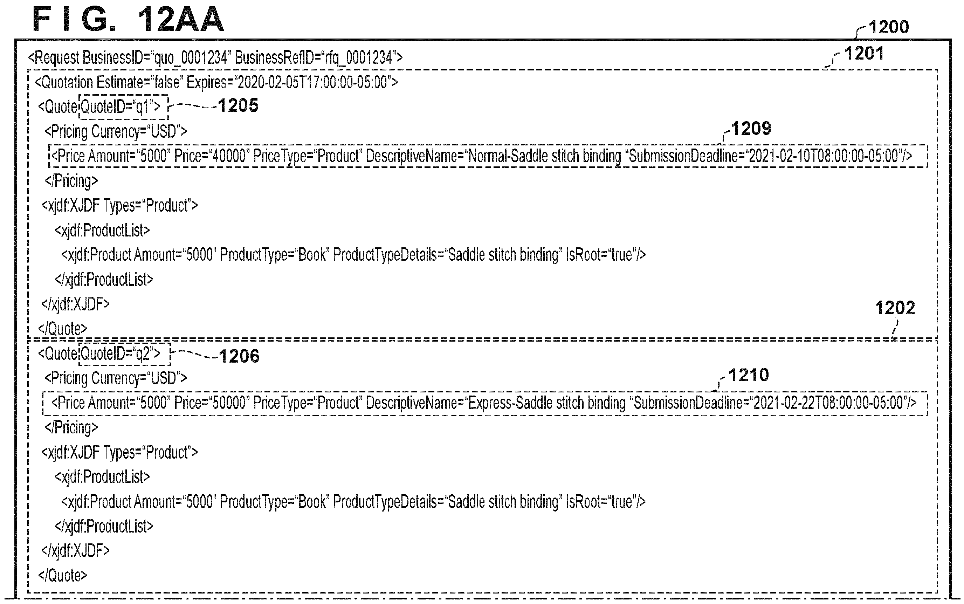

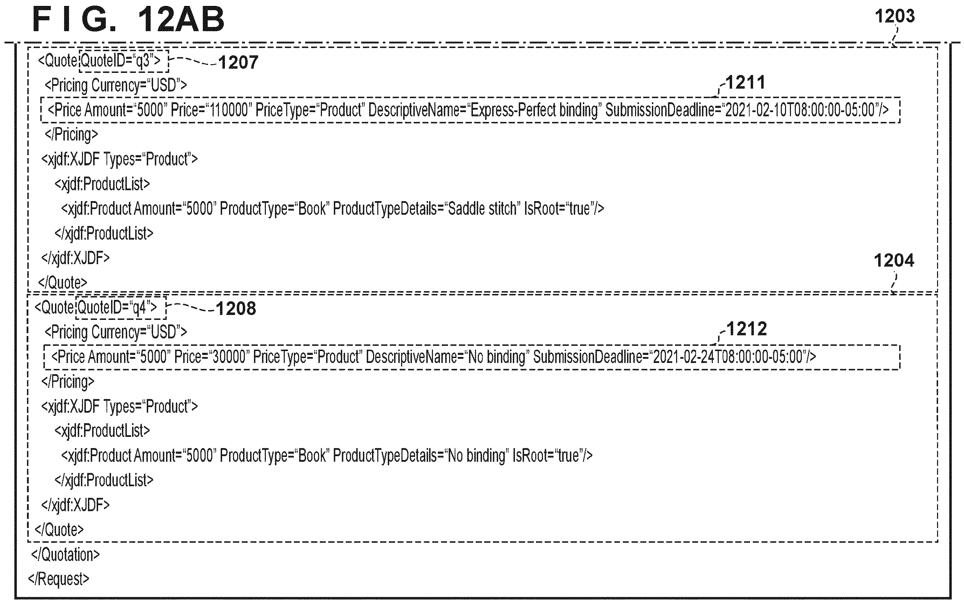

In step S1013, the CPU 201 creates a quotation that includes all product quotations created in step S1009. Examples of quotations to be created are shown in FIG. 12AA and FIG. 12AB. After creation of the response, the process proceeds to step S1015.

In step S1014, the CPU 201 creates a request for desired delivery information. The information request was explained with reference to FIG. 9D. After creation of the request, the process proceeds to step S1015.

In step S1015, the CPU 201 transmits the response created in step S1012, step S1013, or step S1014 to the orderer system.

For the quotation to be created in this flow, the submission deadlines for all products that meet the specifications of the quotation conditions for the customer and can be delivered by the desired delivery are calculated, and unique reference IDs are given to each. Since the customer can select a product and place an order according to the deadline for submission, the customer can make an optimal order with a single quotation request. In the present embodiment, the information of the product need not necessarily be specified. However, the desired delivery must be specified.

### <Data table of production management program and method for calculating submission deadline>

FIG. 11A is a part of a data table of the production management program 409, and a data table 1100 extracts only items whose product name is "Book". In the data table of the second embodiment, product information is composed of three attributes: a product name 1101, a specification 1102, and a type 1103. A unit price 1105 is a cost for preparing one copy. A number of copies 1104, the number of days required for production 1106, the number of days required for shipping 1107, and the number of days required for delivery 1108 are respectively the same as the number of copies 702, the number of days required 703, the number of days required for shipping 704, and the number of days required for delivery 705. The type 1103 indicates whether production is to be carried out in an expedited manner or in a normal manner. In the case of expedited delivery, the price is set higher than usual for expediting delivery date. Even for the same product, the number of days and the price of production will differ with different specifications and types. The customer references the quotation and selects and places an order for an optimal product based on the deadline for submission. When the quotation request 900 of FIG. 9A is received, the products in the data table 1100 are searched in step S1004, and the number of days required for delivery of each product is calculated in step S1006.

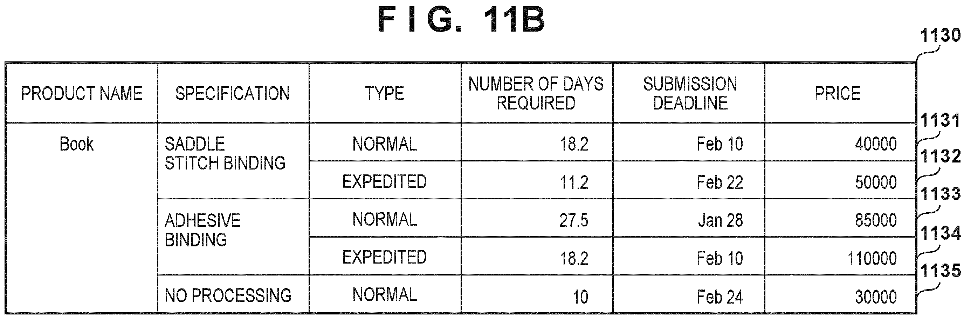

In FIG. 11B, a submission deadline calculation table 1130 indicates the number of days required for delivery, the submission deadline, and the price of each product when 5000 copies are to be produced. Since the quotation request 900 is accepted on February 4, the submission deadline for adhesive binding-normal 1133 has already passed, and it is determined in step S1008 that the deadline is prior to the present time. Since the deadline for the other products is later than the present time, product quotations to which a reference ID is assigned are created in step S1009, and a quotation is created in step S1013. Examples of a quotation are shown in FIG. 12AA and FIG. 12AB.

### <Example of electronic transaction data>

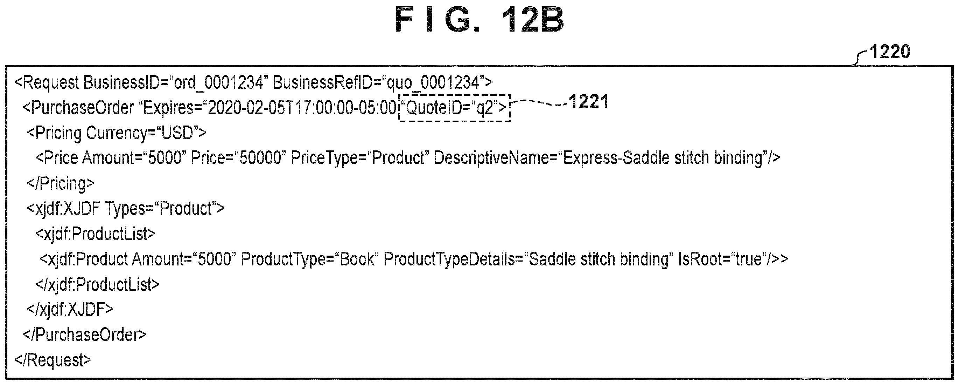

FIG. 12AA, FIG. 12AB, and FIG. 12B are examples of electronic transaction data in the second embodiment. FIG. 12AA and FIG. 12AB are a quotation 1200 sent from the printing company system to the orderer system. FIG. 12B is an order 1220 sent from the orderer system to the printing company system.

Four product quotations 1201, 1202, 1203, and 1204 are described in the quotation 1200 shown in FIG. 12AA and FIG. 12AB. The respective product quotations correspond to products 1131, 1132, 1134, and 1135. The product quotation corresponding to adhesive binding-normal 1133 whose desired delivery cannot be met is not created. Each product quotation is assigned a unique quotation reference ID 1205 1206, 1207, and 1208. Each quotation describes a price and submission deadline 1209, 1210, 1211, and 1212. The orderer selects the product considering the submission deadline and the price, and specifies the product by the quotation reference ID.

The order 1220 shown in FIG. 12B is order data when ordering saddle stitch binding-expedited 1202. In the product specification ID 1221, the quotation reference ID 1206 of saddle stitch binding-expedited 1202 is specified.

The flow of the subsequent processing is the same as that of the first embodiment. However, since there is a submission deadline for each of the product quotations for one quotation request, in specifying a submission deadline when receiving the order data, the submission deadline matching a reference ID of a product quotation included in the order data is acquired. The acquired submission deadline is updated as the submission deadline for the order. The process at the time of submission is as shown in FIGS. 10A and 10B.

In the system of the second embodiment, the printing company can present multiple products that can be delivered by the desired delivery together with submission deadline, and the orderer can select and order the product based on the submission deadline. In addition, it is possible to prevent unnecessary steps from being performed by verifying the submission deadline of the ordered product and determining whether submission is valid.

### (Third Embodiment)

In the first embodiment and the second embodiment, the customer is presented with a submission deadline for delivery by the desired delivery. The submission deadline is decided only in consideration of the delivery being on time, and production efficiency is not considered. The device utilization rate, which is the ratio of the time the device is producing products to the business hours, is known as a KPI (Key Performance Indicator) of the printing company. As a method of increasing the device utilization rate, it is important to manage the production capacity of the apparatus and to formulate a production plan to minimize excess capacity. In the present embodiment, a plurality of submission dates and times are set in accordance with a desired delivery, and the invoice amount is determined in accordance with a quotation according to the actual submission timing. This can allow a plurality of submission deadlines in one quotation. Hereinafter, in the present embodiment, a method of presenting submission deadlines that will not only enable the submission to be on time for production but also will improve production efficiency of the printing company will be described.

### <Schematic diagram of production management program screen>

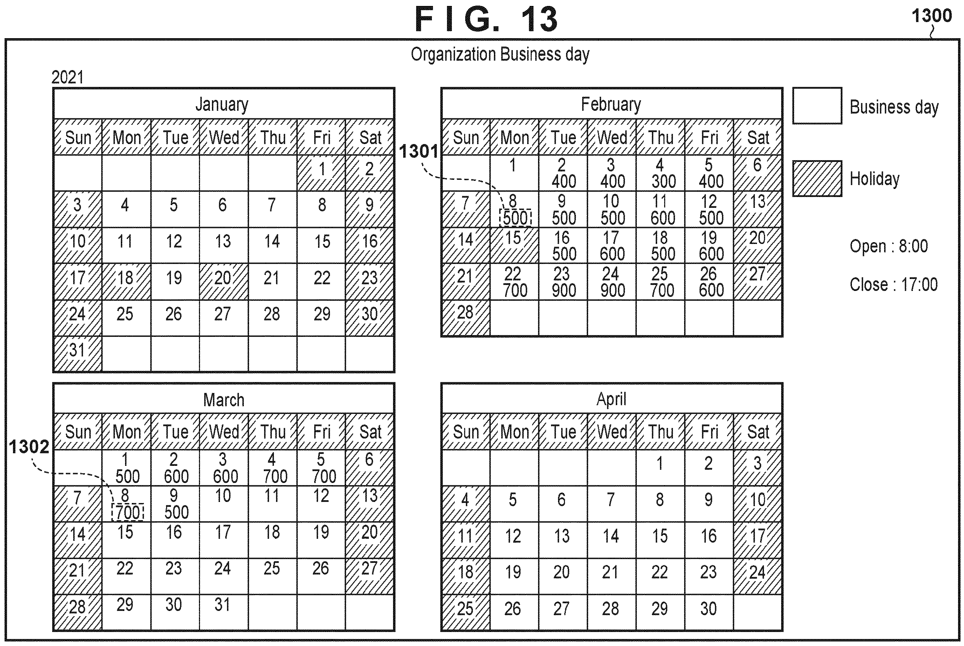

FIG. 13 shows a production capacity management screen 1300 that the production management program 409 has (or provides). The maximum number of products that can be produced per day is determined by the performance of a production apparatus such as an image forming apparatus. The production capacity is obtained by subtracting the number of products scheduled to be produced from the number of products that can be produced. The lower the excess production capacity, the more the performance of a production apparatus can be taken advantage of. The production management program 409 in the present embodiment has a production capacity management function for managing production capacity, and can display how much capacity there is on each business day on the production capacity management screen 1300.

Production capacity 1301 represents the production capacity for each business day. When the number of products scheduled to be produced is assigned to each date, the production capacity is automatically calculated and the display is updated. In a printing company having various image forming apparatuses, it is decided which image forming apparatus is to be used for each product to be produced, and the production capacity is also managed for each apparatus. For simplicity of explanation, it will be assumed that a single production capacity is managed for one business day.

In the case where the production capacity is managed on the production capacity management screen 1300, in the first embodiment and the second embodiment, for the quotation request 900, in order to deliver by March 10 which is the desired delivery, it is only necessary that the production be completed on March 3. Considering the production capacity, if production is started on February 23, production will be completed on time, and therefore, a date and time prior to the start of work on February 23 are decided as the submission deadline.

From the standpoint of production apparatus efficiency (utilization rate), it is more efficient to use the production capacity of an earlier date than the production capacity of a later date when a plurality of production plans with different production start times can be created based on the current production capacity. If the production capacity of an earlier date is not used, it will be wasted, and if the production capacity of the later date is not left open, there is a possibility that an opportunity to receive an order will be missed. In addition, when production is performed just before the delivery date, recovery will be difficult in the case where a problem occurs in the image forming apparatus or the like. On February 1, production efficiency is higher if the production capacity 1301 on February 8 rather than the production capacity 1302 on March 8 is utilized, even if the delivery date is later.

### <Flow of processing when quotation request is received>

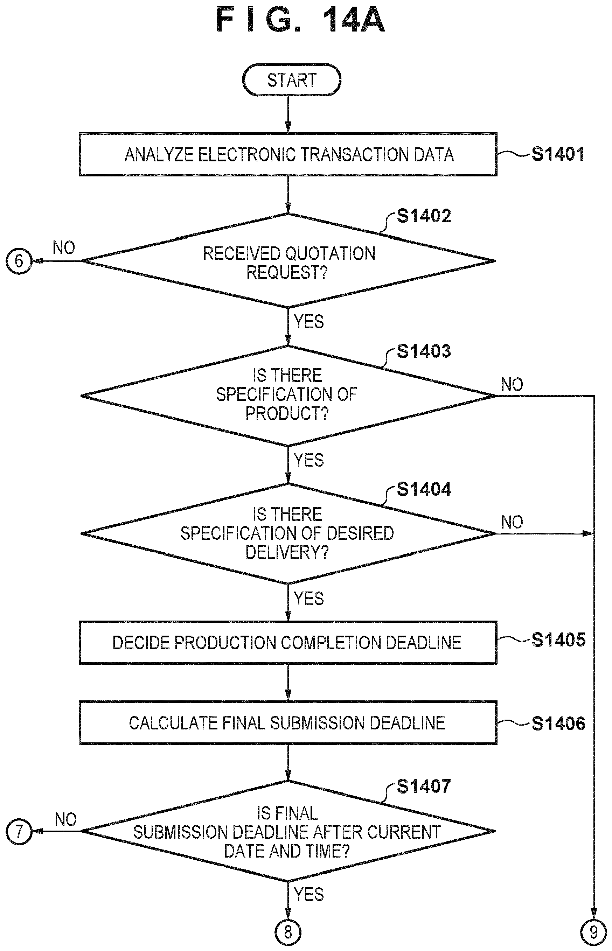

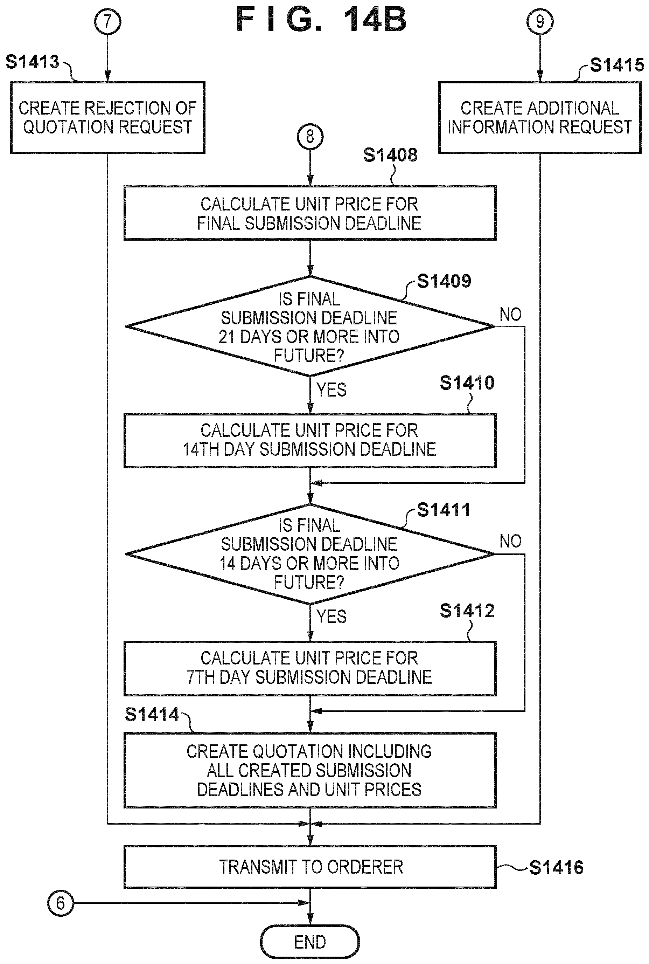

FIGS. 14A and 14B are flowcharts for explaining the flow of processing by the CPU of the information processing apparatus 108 of the printing company system when electronic transaction data is received. Processing starts when electronic transaction data is received. Description will be omitted where it is unrelated to the invention according to this embodiment. Explanation will be omitted for parts that are the same as other figures. Steps S1401 and S1404 are the same as steps S601 and S604.

If it is determined in step S1404 that a desired delivery is specified, the CPU 201 determines the production completion deadline in step S1405. The production complete deadline is obtained by subtracting the number of days required for the post-production steps from the desired delivery. In the example of FIG. 9A, the desired delivery 908 is 17:00 on March 10. The number of days required for shipping and the number of days required for delivery is assumed to be as shown in FIG. 7A. Since the number of production copies is 5000 based on the number of ordered copies 906, the number of days required for shipping is 2.4 days and the number of days required for delivery is 2 days based on the lines 711 and 712, respectively. The production completion deadline can be calculated as March 3 by subtracting the total number of business days of the number of days required for shipping and the number of days required for delivery, which is 4.4 days, from March 10, which is the desired delivery, and rounding up the fraction. The production completion deadline in units of time may be calculated without rounding up the fractions. When the production completion deadline is determined, the process proceeds to step S1406.

In step S1406, the CPU 201 determines the final submission deadline. Since the production is to be completed by March 3 based on the production completion deadline calculated in step S1405, the date on which the production must be started is determined by calculating backward from March 3. The date on which production must be started is the date for which 5000 is first exceeded when, tracing back from March 3, the set production capacity 1301 is added for each date of the production capacity management screen 1300 shown in FIG. 13. The total production capacity between February 22 and March 3 reaches 5300, exceeding 5000 for the first time. Therefore, the date on which production must be started is February 22. In order to start production by February 22, submissions may be accepted by the time that work starts on February 22. Therefore, the final submission deadline is 8:00 when work starts on February 22. When the final submission deadline is determined, the process proceeds to step S1407.

In step S1407, the CPU 201 determines whether the final submission deadline is after the current date and time. The current date and time is obtained from the system time managed by the operating system 402, and compared with the final submission deadline calculated in step S1406. If the final submission deadline is after the present date and time, the process proceeds to step S1408, and if not, the process proceeds to step S1413.

In step S1408, the CPU 201 determines the price corresponding to the final submission deadline that was determined. The price is assumed to be as defined in FIG. 7A. The unit price from line 712 is 8 dollars, and so the quotation price is 40000 dollars in total. When the final submission deadline and the calculated price are stored in the RAM 202 and the HDD 211, the process proceeds to step S1409.

In step S1409, the CPU 201 determines whether the final submission deadline is 21 days or more into the future. The current date and time is obtained from the system time managed by the operating system 402, and its difference from the final submission deadline calculated in step S1407 is calculated. If the final submission deadline is 21 days or more after the present date and time, the process proceeds to step S1410, and if not, the process proceeds to step S1411.

In step S1410, the CPU 201 calculates the price when the submission deadline is on the 14th day from the present day. The price for what production can be performed on an earlier day using a resource (e.g., production capacity) that is likely to be wasted is calculated by lowering the unit price by a predetermined amount. Here, the price is assumed to be determined by discounting production within two weeks by twenty percent and discounting production within three weeks by ten percent. When data is submitted on February 14, the number of copies that can be produced by February 22, three weeks later from the present day, is 2200 copies, which is the total production capacity from February 16 to February 19. Assuming a 10 percent discount on the price of the 2200 copies and no discount on the remaining 2800 copies, the quotation price of 5000 copies is 38240 dollars. The submission deadline and the calculated quotation price are stored in association with each other, and the process proceeds to step S1411.

In step S1411, the CPU 201 determines whether the final submission deadline is 14 days or more into the future. If it is 14 days or more into the future, the process proceeds to step S1412, and if not, the process proceeds to step S1414.

In step S1412, the CPU 201 calculates the price when the submission deadline is on the 7th day from the present day. When data is submitted by the start of business on February 8, the number of copies that can be produced by February 15, two weeks later, is 2600 copies, which is the total production capacity from February 8 to February 12, and similarly the number of copies that can be produced by February 22, three weeks later, is 2200 copies, as calculated in step S1410. Assuming a 20 percent discount and a 10 percent discount respectively, and no discount on the remaining 200 copies, the quotation price of 5000 copies is 34080 dollars. The submission deadline and the calculated quotation price are stored in the RAM 202 in association with each other, and the process proceeds to step S1414.

Step S1413 is the same as step S608.

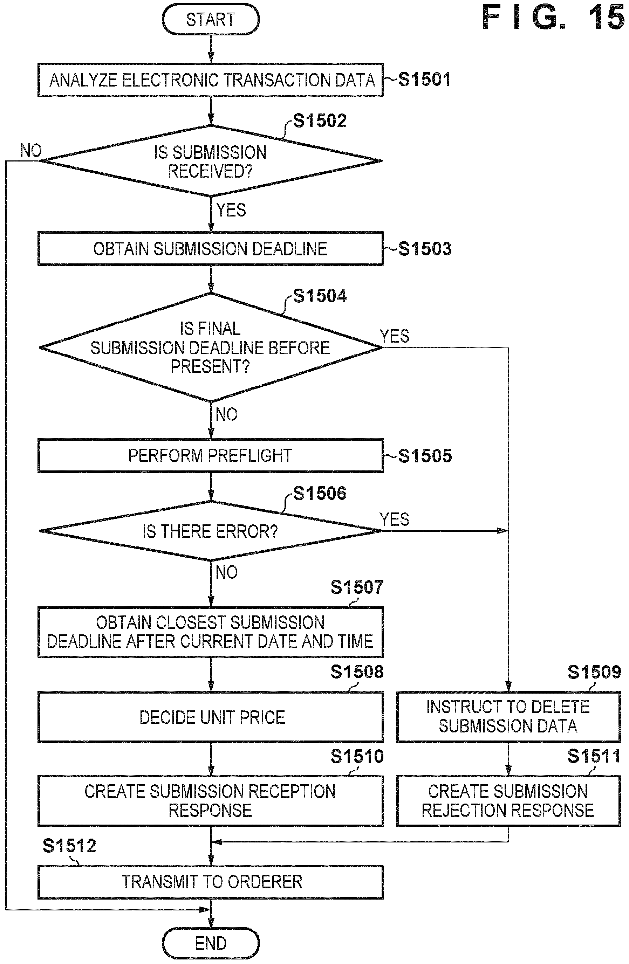

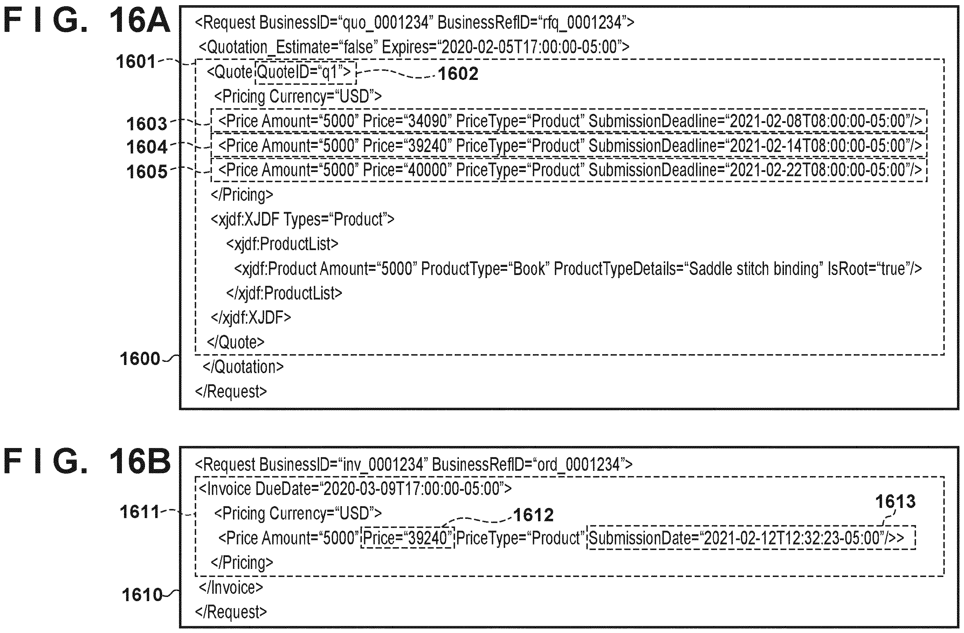

In step S1414, the CPU 201 creates a quotation that includes all submission deadlines and prices stored in step S1406, step S1410, and step S1412. An example of a quotation is shown in FIG. 16A. In the quotation of the present embodiment, a plurality of submission deadlines and quotations including at least a price corresponding to the final submission deadline are stored in one quotation in accordance with the delivery date. The price to be applied is automatically determined by the timing of submission. Determination of the price will be described with reference to FIG. 15. After creating the quotation, the process proceeds to step S1416. Step S1415 and step S1416 are the same as step S610 and step S611. If it is determined in step S1402 of FIG. 14A that the received data is not a quotation request, the process may branch to step S1502 of FIG. 15.

As described above, the final submission deadline is first determined based on the desired delivery. Then, quotations corresponding to each of the different submission deadlines are created starting with the latest submission deadline and progressing through submission deadlines that are earlier by a predetermined amount of time (for example, 7 days) up to a time where the submission deadline is earlier than when the quotation request is received. Thus, a quotation including a plurality of submission deadlines and corresponding quotation money amounts is created. Further, since the price is lower the earlier the submission deadline is, it is possible to promote earlier submission by the orderer.

### <Schedule processing when order is accepted>

In the present embodiment, the information processing apparatus 108 of the printing company system, after receiving order data transmitted by the orderer system for quotation data, creates an operation schedule for an apparatus (for example, an image forming apparatus) for each of a plurality of submission deadlines. An overview of respective schedule creation is the same as that described in the first embodiment, but in the present embodiment, a schedule corresponding to a submission deadline of the quotation is created for one order. For example, in the case of a quotation of the money amount for each of three submission deadlines, three schedules are created. Since only one of these schedules will be executed, these schedules allow for temporally overlapping device operation. As described with reference to FIG. 15, since a schedule to be executed is determined in accordance with the submission date and time and the submission deadline at the time of submission, the schedules other than the determined schedule may be canceled at that time. As in the first embodiment, the operation schedule may be illustrated with the production capacity as shown in FIG. 13.

### <Flow of processing when submission is received>

FIG. 15 is a flowchart for explaining the flow of processing by the CPU 201 of the printing company system of the information processing apparatus 108 when electronic transaction data is received. Processing starts when electronic transaction data is received. Description will be omitted where it is unrelated to the present invention. The same parts as those in FIG. 8 will be omitted.

Steps S1501 and S1502 are the same as steps S801 and S802.

In step S1503, the CPU 201 obtains the order referred to by the submission and also acquires the final submission deadline of the quotation referred to by the order. The order referenced by the submission can be obtained from the order reference ID 962, and the quotation referenced by the order can be obtained from the quotation reference ID 943.

In step S1504, the CPU 201 determines whether the final submission deadline is prior to the current date and time. The current date and time is obtained from the system time managed by the operating system 402, and compared with the final submission deadline is calculated in step S1503. If the final submission deadline is prior to the current date and time, the process proceeds to step S1509, and if not, the process proceeds to step S1505.

Steps S1505 and S1506 are the same as steps S805 and S806.

In step S1507, the CPU 201 acquires, from among the submission deadlines associated with the quotation acquired in step S1503, the submission deadline closest to the current date and time after the current date and time acquired in step S1504. The submission deadline is 8:00 on February 8 if it currently is before 8:00 February 8; the submission deadline is 8:00 on February 14 if it is before 8:00 February 14; and the submission deadline is 8:00 on February 22 if it is on or after 8:00 February 14. When the submission deadline is obtained, the process proceeds to step S1508.

In step S1508, the CPU 201 acquires the price stored in association with the submission deadline acquired in step S1507, and determines the acquired price as the price to be used for the invoice. After determining the price, the process proceeds to step S1510.

Steps S1509 and S1512 are the same as steps S807 and S810. As described above, when an order is submitted, the quotation money amount corresponding to the earliest submission time after the submission time is determined as the invoice amount.

### <Example of electronic transaction data>

FIG. 16A and FIG. 16B illustrate examples of electronic transaction data in the present embodiment. FIG. 16A is a quotation 1600 sent from the printing company system to the orderer system. FIG. 16B is an invoice 1610 sent from the printing company system to the orderer system.

In the quotation 1600, all prices calculated in step S1408, step S1410, and step S1412 and the submission deadlines 1603, 1604, and 1605 are described in one product quotation 1601. Since there is only one product quotation, only one quotation reference ID 1602 is assigned. The orderer may place an order at order 940 regardless of which submission deadline is selected.

The invoice 1610 is electronic transaction data indicating an invoice price and a deposit deadline. A command that represents the invoice is Invoice 1611. The invoice 1610 was submitted after 8:00 February 8 and before 8:00 February 14. In step S1508, prices are automatically determined from the date and time of submission, and an invoice price 1612 is described in the invoice 1610. The submission date and time 1613 may be described as the basis for the price.

The electronic transaction system provided by the present embodiment presents the customer with a submission deadline that will be on time for delivery. In addition, multiple submission deadlines with different prices are presented to the orderer customer so that earliest production capacity, which is likely to be wasted, can be utilized. The money amount (invoice amount) actually invoiced is automatically determined from the date and time of the submission and the quotations for the respective submission deadlines presented. If the final submission deadline has passed, the submission is treated as invalid without performing preflight; if is prior to the final submission deadline, preflight is performed and it is determined whether the print data is valid; if there is no error, the submission is determined to be valid. Furthermore, unnecessary steps can be avoided as in the first embodiment and the second embodiment.

According to the embodiment described above, the submission deadline for realizing the desired delivery of the orderer is determined and the notification is given to the orderer. Further, it is judged whether or not the submission has been made before a submission deadline for which the desired delivery can be made. Preflight will be automatically executed only if the submission is performed by the determined submission deadline, and will only be accepted as a valid submission if there is no problem, after which subsequent production steps can be executed. When submission is after the submission deadline, the submission is not accepted, similarly to when a problem is detected in the print data, and thereby unnecessary steps are avoided.

Further, in the second embodiment, a plurality of quotations are provided for one quotation request, and the print product is produced and delivered in accordance with an order in which one of those quotations is selected. As a result, it is possible to place an order with a single quotation, and it is possible to promote reduced labor and improved work efficiency.

Further, in the third embodiment, it is possible to provide a quotation including a quotation money amount for each submission deadline with a plurality of submission deadlines in response to one quotation request. In accordance with the actual submission date and time, the quotation money amount based on the nearest submission deadline after the submission date and time may be made to be the invoice amount, and the production operation may be carried out on a schedule according to the submission deadline. By this, the orderer is encouraged to submit the data earlier and this contributes to an efficient use of the production facilities of the printing company.

### [Other Embodiments]

The present invention can also be realized as a process executed by supplying a program implementing one or more functions of the above-described embodiment to a system or apparatus over a network or by a storage medium and then causing one or more processors of a computer of the system or apparatus to read out and execute the program. The present invention can also be implemented by a circuit configured to implement one or more functions, for example, an ASIC.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An order management system comprising
first reception means configured to receive a quotation request for a print product, and based on a product specification and a desired delivery included in the quotation request and a production capacity of an apparatus for producing the print product, create a quotation including a submission deadline;
transmission means configured to transmit to an orderer the created quotation;
second reception means configured to receive an order; and
update means configured to update the production capacity based on the quotation corresponding to the order.

2. The order management system according to claim 1, wherein
if the created submission deadline is prior to the timing at which the quotation request is received, a response indicating that the quotation request is rejected is transmit to the orderer.

3. The order management system according to any one of the preceding claims, wherein
in a case where, in the quotation request, information necessary for creation of a quotation is insufficient, a request for the necessary information to the orderer is made.

4. The order management system according to any one of the preceding claims, wherein
the submission deadline is determined based on the desired delivery, the production capacity, and the time required for production decided in accordance with the product specification.

5. The order management system according to any one of the preceding claims, wherein
the quotation for all products corresponding to the product specification is craeted, and identification information is associated with each of the products.

6. The order management system according to claim 5, wherein
the quotation for all products corresponding to the product specification is created, and
when the order is received, the production capacity is updated in accordance with the quotation of a product identified by the identification information included in the order.

7. The order management system according to claim 5, wherein
if the created submission deadline for all of the products is prior to a timing at which the quotation request is received, a response indicating that the quotation request is rejected is transmitted to the orderer.

8. The order management system according to any one of claims 1 to 4, wherein
the creation means create a quotation that allows a plurality of different submission deadlines in accordance with the desired delivery, and makes a quotation money amount different for each of the submission deadlines.

9. The order management system according to claim 8, further comprising
a determination means configured to determine an invoice amount for the orderer, wherein
in a case where there is a submission corresponding to an order, a quotation money amount corresponding to an earliest submission time after a submission time corresponding to the order is determined as an invoice amount.

10. The order management system according to claim 8 or 9, wherein
the creation mneas creates the quotation so that a quotation money amount is less for an earlier submission deadline.

11. The order management system according to any one of claims 8 to 10, wherein
the creation means create a latest submission deadline and the quotation in accordance with the desired delivery, and creates the quotation by progressing through submission deadlines that are progressively earlier each by a predetermined amount of time from the latest submission deadline until a time where the submission deadline is earlier than when the quotation request is received.

12. The order management system according to any one of the preceding claims, further comprising
means configured to receive a submission corresponding to the order, and if a submission time is before a submission deadline corresponding to the order, produce a print product by steps according to the product specification based on submission data.

13. A program for causing a computer to function as the order management system according to any one of the preceding claims.

14. An order management method executed by an order management system, the method comprising:
receiving a quotation request for a print product, and based on a product specification and a desired delivery included in the quotation request and a production capacity of an apparatus for producing the print product, creating a quotation including a submission deadline;
transmitting to an orderer the created quotation;
receiving an order; and
updating the production capacity based on the quotation corresponding to the order.
